# EUROPEAN PATENT APPLICATION

(11) **EP 1 463 327 A1**
(43) Date of publication of application: **29.09.2004**
(21) Application number: 03008380.2
(22) Date of filing: 10.04.2003
(51) Int. Cl.: H04N 7/20, H04B 7/185

(54) **Integrated high frequency terminal apparatus for wireless communication systems**

(30) Priority: 28.03.2003 CA 2424025
(71) Applicant: NORSAT INTERNATIONAL INC., Burnaby, British Columbia V5C 6G9 (CA)
(72) Inventor: Trajkovic, Sasa T., Burnaby, British Columbia V3N 4W2 (CA); Dwornik, Glen Allan, New Westminster, British ColumbiaV3M 3X7 (CA); Schefter, Michael John, Vancouver, British Columbia V6M 1R8 (CA); Bezuidenhout, Petrus, Port Coquitlam, British Columbia V3C 5C4 (CA)
(74) Representative: Bongiovanni, Simone

(57) **Abstract**

A portable apparatus for upconverting and downconverting the signals used to provide information interchange between terminals in terrestrial or satellite communications systems. The apparatus enables the upconversion and downconversion of electronic signals from baseband to the frequencies of the radio waves used for communications between the terminals. Such frequencies would typically be in the microwave range, i.e. from several GHz upwards. In the preferred embodiment the apparatus comprises two suitcase-sized units. One unit contains the apparatus for the modulation of electronic signals from base band frequencies to a chosen intermediate frequency and microprocessor-based circuitry to provide a centralized interface for overall monitoring and control of the apparatus. In addition, the first unit includes a built-in spectrum analyzer module which enables the visual spectral display of both transmit and receive signals. The second unit contains upconverters and downconverters for upconversion and downconversion of the selected intermediate frequencies to and from the desired air-link frequencies.

## Description

### FIELD

The present invention relates generally to wireless communications systems.

### BACKGROUND OF THE INVENTION

Terminals in terrestrial or satellite microwave communications systems contain apparatus for the processing of base band signals, such as voice, video, or data signals, such that these signals can be transmitted and received to and from other terminals. A major constituent of such terminals is the apparatus which upconverts and downconverts the base band signals to or from the frequencies used for the air-link. The prior art does not disclose portable terminals, capable of reception and transmission, that are able to provide in-service terminal monitoring, control, alignment, and commissioning, without the need for specialized external equipment.

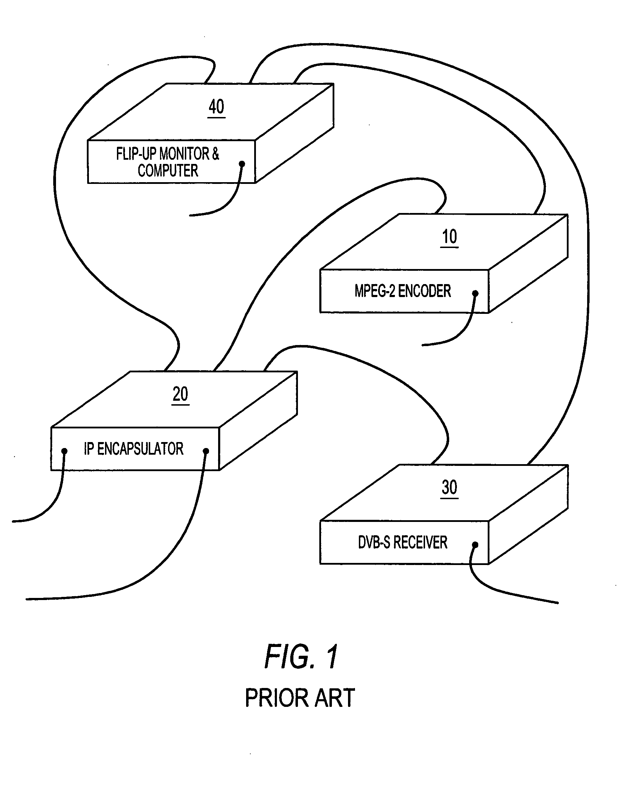

It is also common practice in the prior art to connect various independent base band and unconversion and downconversion components to form an earth terminal. Such earth terminals consist of a number of autonomous units or modules, such as video encoders, encapsulators, modulators, demodulators, receivers, upconverters and downconverters, interconnected by cables and controlled by software. An example of such a system is shown in Fig. 1. The depicted earth terminal 50, consists of an MPEG-2 Video Encoder 10, an IP Encapsulator 20, a DVB-S Receiver 30, and a Monitor and Computer 40. However, such previous art implementations suffer from several major drawbacks. Firstly, the overall assembly is large and the individual modules have to be re-assembled and interconnected in the field such that use in a portable mode is not practical. In addition, the re-assemby and interconnection requires time and there is a risk that errors are made. An important requirement for portable earth terminals is that they be capable of rapid on-site deployment and communications, especially in applications such as satellite news gathering. Time lost in re-assembly is costly and inconvenient.

Also, since the overall earth terminal is controlled by software resident on the computer terminal 40, each individual device, unit, or module is required to have a common control interface. Since the earth terminal 50 is composed of units obtained from individual manufacturers or suppliers, either each unit would have to be manufactured to a single common specification, which is costly and often impossible; or, alternatively, each unit must have an individual software interface, which greatly increases the complexity of the control and monitor software as well increasing the likelihood of errors.

In the prior art, there have been attempts to overcome these limitations, through a partial integration of a number of the individual modules. For example, an IP Encapsulator has been integrated with an MPEG-2 Encoder. In addition, an MPEG-2 Encoder has been integrated with a DVB-S Modulator. However, there does not exist any overall integration of all the required earth terminal functions.

In one example of the prior art, U.S. Pat. 5,603,102, issued to Rebec, discloses a portable earth terminal. The apparatus described in Rebec compartmentalizes the transmit and receive functions wherein base band transmit and receive apparatus are physically and electrically separated. Such separation does not permit the combination of like base band functions, nor does it permit the incorporation of a built-in means for spectral display and analysis. Furthermore, Rebec does not disclose means for IP input/output and processing, or means for providing a quality of service.

US Pat. 5,081,703, issued to Lee, discloses an earth terminal which is capable of providing the features and functions of a remote telephony switching office. However, the apparatus described is not portable, nor does it contain means for self-test or alignment.

In another example of the prior art, US Pat. 6,031,878, issued to Tomasz et al., discloses means for the reception of signals from a satellite by a fixed earth terminal. However, no means of transmitting a signal from an earth terminal to a satellite is disclosed, nor is any means of aligning such an apparatus without the need for specialized external test equipment. In addition, the apparatus of Tomasz is limited to digital video reception.

US Pat. 5,915,020, issued to Tilford et al., discloses means for the reception of video signals from a satellite by a portable earth terminal. No means of transmitting a signal from an earth terminal to a satellite is mentioned, nor is any means of built-in spectral display for the purpose of test and alignment.

Accordingly, it is an object of this invention to provide a highly integrated upconversion/downconversion apparatus suitable for portable implementations, which incorporates built-in overall monitoring and control of all functions, thus eliminating the need for external test and monitoring equipment.

It is a further object of this invention to provide a portable, integrated base band processing engine which, when operated in conjunction with upconverters and downconverters, can provide all the functions required in a portable satellite earth terminal.

It is yet a further object of this invention to provide an integrated means for viewing the spectra of both transmit and receive signals. This is in order to assure proper operation, as well as, in the case of satellite systems, to aid in alignment of the earth terminal and to facilitate satellite identification.

### SUMMARY OF THE INVENTION

These and other objects have been realized in a portable terminal for terrestrial or satellite wireless communications comprising a baseband unit and an upconversion and downconversion apparatus.

The baseband unit integrates all the base band functions of an earth terminal and comprises an MPEG-2 Encoder, a Voice Over IP (VoIP) gateway, an IP Encapsulator, a DVB-S Receiver, and an Ethernet Network Interface Connection Module. In the preferred embodiment, the baseband unit includes a computer, a keyboard, a mouse, and a flip-up monitor.

The input to the baseband unit can be either raw video, voice over IP, or IP data. The baseband unit allows for the input of several standard video formats. The baseband unit encodes this raw video input signal into MPEG-2, Part 2 format. This MPEG-2 encoded data is then sent to the IP encapsulator for further processing. In addition, the baseband unit allows for the input of voice signals, typically emanating from an analog or digital telephone. The voice signals are encoded into IP format and then sent to the IP encapsulator for further processing.
Furthermore, IP data can be inputted via an Ethernet connection and forwarded to the IP encapsulator for processing. Independent streams from multiple sources are multiplexed. The resultant stream can then be inputted to a modulator, resident outside of the baseband unit. In the preferred embodiment the baseband unit also provides the capability of displaying on a monitor in real-time, the encoded video that is being transmitted.

The baseband unit also provides the capability of demodulating, decoding, and receiving IP traffic from a satellite. The baseband unit is capable of demodulating an L-band signal, decoding MPEG-2, Part 1 transport streams into IP packets, and sending these IP packets to the end user.

The baseband unit also includes a rugged and mobile computer for IP data applications, video monitoring, management functions, and spectral analysis. Computer IP applications, such as Web browsing, telnet, ftp, and email can be run, and a single point user interface is provided. This user interface permits control and monitoring of the earth terminal, including all of the components of the baseband unit as well as associated apparatus, such as upconverters and downconverters.

The upconversion and downconversion apparatus comprises two units, the RF1 processing and control unit and the RF2 processing unit which, when combined with additional processing and powering apparatus, can be used for the reception and transmission of signals to and from terminals in terrestrial or satellite wireless communications systems.

The RF1 Processing and Control Unit and the RF2 Processing Unit are used for upconversion and downconversion of signals to and from the air link frequencies between terrestrial terminals or between earth terminals and a satellite. The RF1 Processing and Control Unit and the RF2 Processing Unit are connected by a multi-conductor cable, referred to herein as the Inter Facility Link.

The RF1 Processing and Control Unit is used for modulating and upconverting base band signals, which may contain voice, video, or any form of data, to the intermediate frequencies used in the Interfacility Link. The RF1 Processing and Control Unit comprises a modulator to which the base band signal is applied. The output of this modulator is then upconverted to the intermediate frequency used in the Interfacility Link. In the illustrative embodiment the modulator is a 70 MHz modulator and the frequency of the Interfacility Link is in the 950 MHz to 1450 MHz range of the L-band, however, other L-band frequencies may be used.

The RF1 Processing and Control Unit also contains a Spectrum Analyzer Module, which accepts signals from a transmit downconverter and a receive downconverter. These signals are then forwarded to the base band unit.

The RF2 Processing Unit provides block upconversion and block downconversion of transmit and receive signals, respectively, between the air interface frequency and the L-band.

The RF2 Processing Unit consists of a transmitter, which upconverts the L-band transmit signal, received from the Interfacility Link, to the air-link frequency used for transmission to another terminal or to a satellite. This air-link frequency transmit signal is then amplified to a level suitable for transmission. A sample of the transmitted signal is downconverted to L-band by means of a block downconverter and is used in the RF1 Processing and Control Unit for monitoring and display purposes.

The RF2 Processing Unit also contains a Low Noise Block Downconverter, which downconverts the air-link signal received from another terminal or satellite to L-band frequency for carriage on the Interfacility Link.

The RF1 Processing and Control Unit also comprises a stable reference source for providing the reference frequencies needed for modulation, upconversion and downconversion. A microprocessor is used for the control and monitoring of both the RF1 Processing and Control Unit and the RF2 Processing Unit.

The apparatus herein described results in a novel terminal capable of rapid deployment without the need for external specialty test equipment. This is particularly important in the case of portable terminals.

Other objects, features, aspects and advantages of the present invention will become apparent to those of ordinary skill from the following detailed description of the invention taken in conjunction with the accompanying drawings.

### BRIEF DESCRIPTION OF THE DRAWINGS

The invention itself both as to organization and method of operation, as well as additional objects and advantages thereof, will become readily apparent from the following detailed description when read in connection with the accompanying drawings, wherein:
**Fig. 1** illustrates a typical prior art satellite earth terminal base band assembly, illustrating how the separate units are interconnected;
**Fig. 2** is a block diagram of the earth terminal of the present invention;
**Fig. 3** is a block diagram of the baseband unit;
**Fig. 4** is a block diagram of the RF1 Processing and Control Unit; and
**Fig. 5** is a block diagram of the RF2 Processing Unit.

### DETAILED DESCRIPTION OF THE INVENTION

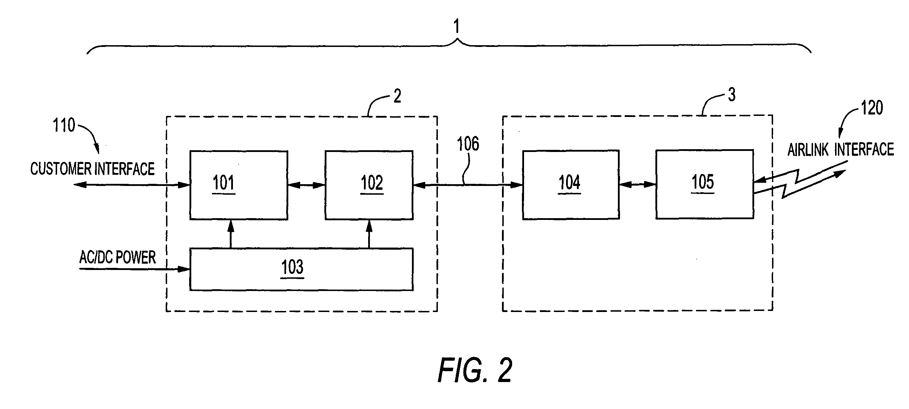

**Fig. 2** illustrates how the baseband unit **101** can be interconnected with other components to form a complete satellite earth terminal **1**. The satellite earth terminal **1** can be seen to consist of two distinct physical packages, namely suitcase **2**, and suitcase **3**. Suitcase **2** is composed of a baseband unit **101**, which is the subject of the present invention, an AC-DC and DC-AC power supply **103**, and an RF1 processing and control unit **102**. Suitcase **3** is composed of an RF2 processing unit **104** and antenna and superstructure **105**.

Referring to **Fig. 2**, the preferred embodiment of the terminal **1** of the present invention comprises suitcase-sized units **2** and **3**. Suitcase **2** is composed of a Baseband Processing Unit **101**, an AC-DC and DC-AC Power Supply **103**, and the RF1 Processing and Control Unit **102**. Suitcase **3** is composed of the RF2 Processing Unit **104** and an Antenna and Superstructure **105**.

In **Fig. 2**, bi-directional interconnecting lines are used to indicate that signal flow is bi-directional. That is, signal flow can be from the customer interface **110** through to the air-link interface **120**, and equally from the air-link interface **120** to the customer interface **110**. The following is a high level view of the signal processing which occurs in satellite earth terminal **1**, with emphasis on the signal processing within baseband unit **101**. The relationship between baseband unit **101** and the other components in the satellite earth terminal **1** are described to better explain the functions of baseband unit **101**.

In the transmit direction, a base band signal originating at the Customer Interface **110** enters Suitcase **2**. This base band signal first enters Base Band Unit **101**. The base band signal then leaves Base Band Unit **101**, and enters RF1 Processing and Control Unit **102**. Said RF1 Processing and Control Unit **102** upconverts the base band signal to an L-band intermediate frequency transmit signal. The frequency of the Interfacility Link **106**, for purposes of illustration only, is at L-band. The AC-DC and DC-DC Power Supply **103** provides the electrical power required for Base Band Unit **101**, RF1 Processing and Control Unit **102**, and RF2 Processing Unit **104**. Electrical power for RF2 Processing Unit **104** is transmitted from the AC-DC and DC-AC Power Supply **103** to RF2 Processing Unit **104** by means of Interfacility Link **106**.

The L-band transmit signal from Suitcase **2** is transmitted to Suitcase **3** by means of the multi-conductor Interfacility Link **106**. Said Interfacility Link **106** provides bilateral connection for the L-band transmit and receive signals, as well as all monitoring and control signals, all frequency reference signals, and all electrical power required for Suitcase **3**.

The intermediate frequency transmit signal enters Suitcase **3**, and is connected to the RF2 Processing Unit **104.** In RF2 Processing Unit **104**, the intermediate frequency transmit signal is upconverted to the frequency used for the air-link to another terminal or to the satellite, and amplified to the power level required. The air-link frequency transmit signal is then transmitted by means of Antenna and Superstructure **105**.

Similarly, in the receive direction, the air-link receive signal is received from another terminal or from the satellite by means of the Antenna and Superstructure **105**. The air-link receive signal is then applied to RF2 Processing Unit **104**, where it is downconverted to the intermediate frequencies used in the Interfacility Link **106.**

In Suitcase **2**, the intermediate frequency receive signal is connected to RF1 Processing and Control Unit **102**. In RF1 Processing and Control Unit **102** the signal is passed through, unchanged in frequency, to Base Band Unit **101**. Base Band Unit **101** outputs to the Customer Interface **110**.

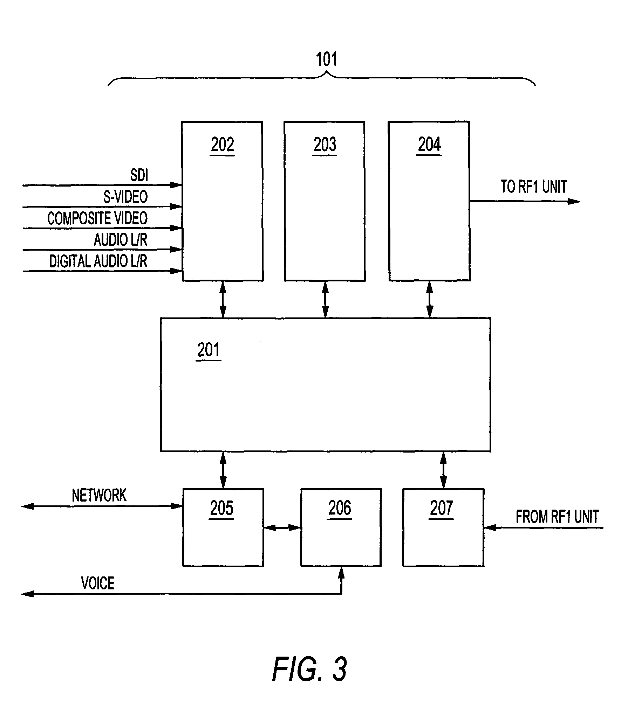

**Fig. 3** is a block diagram of the baseband unit **101**. Baseband unit **101** is seen to consist of a motherboard **201**, which may incorporate computer functions, and which provides the means for interconnecting the various constituents of baseband unit **101**. Baseband unit **101** also consists of an MPEG-2 encoder **202**, a computer **203**, containing a mouse and a flip-up monitor, an IP encapsulator **204**, an Ethernet network interface connection module **205**, a voice over IP gateway module **206**, and a DVB-S receiver **207**.

Alternatively, voice is inputted to the VoIP interface module **207** either through the analog or digital interface. The VoIP interface module **207** encodes the voice data into IP packets. The IP formatted voice data is then inputted to the Ethernet network interface module **205** and then inputted to the IP encapsulator **204** for further processing.

Alternatively, IP data from the customer interface **110** can be inputted to the Ethernet network interface module **205** of the baseband unit **101**. The IP data is then inputted, through motherboard **201**, to the IP encapsulator **204** for further processing.

The IP encapsulator **204** encapsulates the inputted IP data, MPEG-2, Part 2 encoded video data, and/or IP encoded voice, into MPEG-2, Part 1 Transport Stream packets, and outputs the time division multiplexed signal onto either Asynchronous Serial Interface (ASI) or an Synchronous Serial Interface (SPI) format. The MPEG-2, Part 1 Transport Stream packets are then inputted to the RF1 processing and control unit **102** where they are modulated onto a 70 MHz carrier. The modulated output is then upconverted to L-band, and applied, through interfacility link **106**, to RF2 processing unit **104**.

In RF2 processing unit **104**, the L-band input signal from RF1 processing and control Unit **102** is upconverted to the desired transmit frequency which, in this example, is Ku or Ka band. The upconverted signal is then amplified to the power required for transmission to a satellite, and transmitted by means of antenna and superstructure **105**.

In the receive direction, the air link signal received from the satellite enters suitcase **3**, and is applied to antenna and superstructure **105**. The receive signal is then downconverted.to L-band, and connected to RF1 processing and control unit **102** via interfacility link **106**.

The L-band receive signal obtained from RF2 processing unit **104** by means of interfacility link **106** passes through RF1 processing and control unit **102** unchanged in format and frequency, and is applied to base band unit **101**.

The L-band receive signal from RF1 processing and control unit **102** enters base band unit **101** and is applied to DVB-S Receiver **207**. The DVB-S receiver **207** demodulates the L-band receive signal into MPEG-2, Part 1 Transport Stream packets. The DVB-S receiver decodes the MPEG-2, Part 1 Transport Stream packets to base band data, and forwards the base band data to the computer **203** for processing and outputting to the customer interface **110.**

IP Encapsulator **204** contains a built-in quality of service means. The quality of service means comprises a three-tier system, wherein, in the first tier, individual bundles of Packet Identifiers (PIDs) can be created. Each bundle may be assigned a Constant Bit Rate, Variable Bit Rate, or Uncommitted Bit Rate. The second tier establishes the quality of service of individual PIDs within each bundle. The individual PIDs within each bundle can be assigned a Constant Bit Rate, Variable Bit Rate, or Uncommitted Bit Rate. The third tier establishes the quality of service of IP packets carried by a PID. The IP packets, which are identified by a destination IP address, may be assigned a rate limit, limiting the rate at which said destination IP packets can be transmitted. By such means, a bundle can be configured as a shared or dedicated bundle. Also, a PID within a shared bundle can use available bandwidth from another shared bundle, while a PID within a dedicated bundle is only permitted to share bandwidth within its own dedicated bundle.

Using the quality of service means, priorities can be assigned to the PIDs within a bundle as well as to the bundles themselves. Thus, the shared bundle with the highest priority will gain access to the available bandwidth. Also, when two shared-bundle PIDs contend for available bandwidth, the PID with the highest priority is assigned the bandwidth.

The operation of Baseband unit **101** is explained by describing the main signal flow, firstly for the transmit direction. The input from the customer interface **110** can be in the form of raw video, voice, (e.g. from a telephone) or IP data (e.g. from an IP network).

Raw video is inputted to MPEG-2 encoder **202** through either the serial digital interface (SDI), the S-Video, or the composite video input/output. MPEG-2 encoder **202** encodes the inputted video data from either the SDI, S-Video, or composite video inputs, into MPEG-2 Part 2 format encoded data. The MPEG-2 format encoded data is then inputted to the IP encapsulator **204** for further processing.

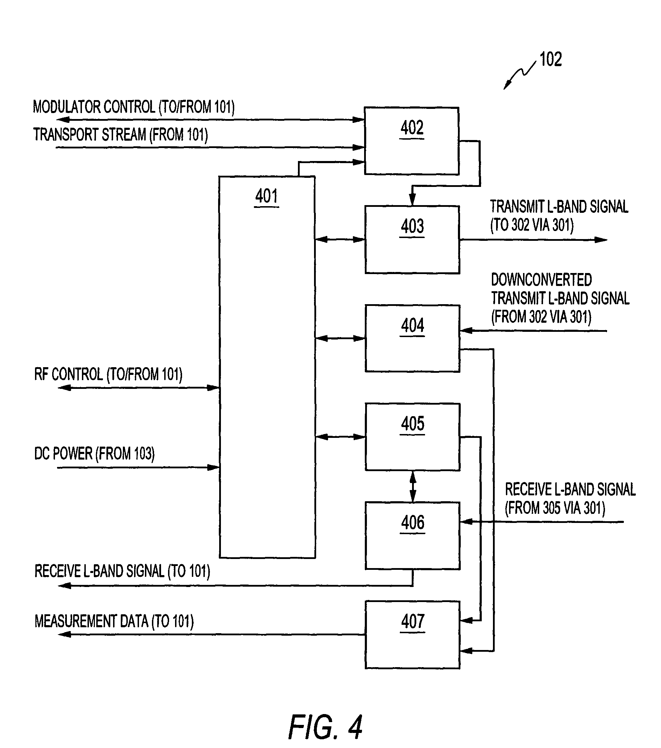

The invention is further explained by reference to **Fig. 4**, which is a block diagram of the RF1 Processing and Control Unit **102**. RF1 Processing and Control Unit **102** is seen to consist of a Monitor and Control Unit **201**, which incorporates means for microprocessor control and monitoring, DC-DC power supply, and a reference frequency source. RF1 Processing and Control Unit **102** also consists of a Modulator **202**, a 70 MHz to L-band Upconverter **203**, a Transmit Downconverter **204**, a Receive Downconverter **205**, a Rx Splitter **206**, and a Spectrum Analyzer Module **207**.

Referring to **Figs. 2** and **4,** the operation of RF1 Processing and Control Unit **102** is explained by describing the main signal flow, firstly for the transmit direction. The base band signal from Base Band Unit **101** is applied to Modulator **402** to modulate a 70 MHz Oscillator.

Modulator **402** can be fully controlled and monitored by the user through a user interface provided in Base Band Unit **101**. The base band signal comprises a transport stream containing the audio, video, and data packets from Base Band Unit **101**, is processed by the Modulator **402** as defined in ETS 300-421.

The transport stream is randomized in Modulator **402** by combination with a pseudo random binary sequence. The randomizing is performed to ensure sufficient binary transitions and to meet ITU transmitted power requirements. The process encompasses eight frames and then is re-initialized. Sync bytes are not randomized and every eighth sync bit is inverted to provide an initialization signal for the descrambler.

Following randomization, each packet of the transport stream (including the sync byte) is block coded using a RS (204, 188, 8). Each encoded packet is made up of 1 sync byte, 187 data bytes and 16 bytes of redundancy.

After block coding, the packets are convolutional-interleaved, creating interleaved frames. The convolutional interleaver maintains periodicity of the coded packet (204 bytes). Interleaving is performed to spread burst errors over many frames and thus improve the performance of the RS code.

The interleaved frame is then convolutional coded and then punctured to provide inner code rates of 1/2, 2/3, ¾, 5/6 and 7/8. The base convolutional code is a K=7, rate ½ code. Thus rate % inner code does not use puncturing. The outputs of the convolutional coder are applied to I and Q signals.

The I and Q signals are square root raised cosine filtered. The roll off factor is 0.35. The shaped I and Q signals are QPSK modulated. The mapping of I and Q uses Gray coding and absolute mapping. **M**odulator **402** may also spectrally invert the QPSK signal if required.

The modulated 70MHz output of **M**odulator **402** is then applied to 70 MHz to L-band Upconverter **403**. Said 70 MHz to L-Band Upconverter **403** utilizes a signal obtained from a reference frequency source in the Monitor and Control Unit **401** to lock its Local Oscillator to be able to accurately upconvert the modulated 70 MHz output from Modulator **402** to the required intermediate frequency range for application to the Interfacility Link **106**.

In the receive direction, the intermediate frequency receive signal from the Interfacility Link **106** enters the RF1 Processing and Control Unit **102** and is applied to the Rx Splitter **406.** The Rx Splitter **406** provides two output paths. The main path contains the intermediate frequency receive signal, which passes unmodified to the Baseband Unit **101**. In addition, the Rx Splitter **406** provides an output which is applied to the Rx Downconverter **405.**

The Rx Downconverter **405** downconverts the incoming intermediate frequency receive signal to receive 25 MHz signal, and forwards the receive 25 MHz signal to the Spectrum Analyzer Module **407**. The reference frequency for this downconversion process is obtained from the Monitor and Control Unit **401.**

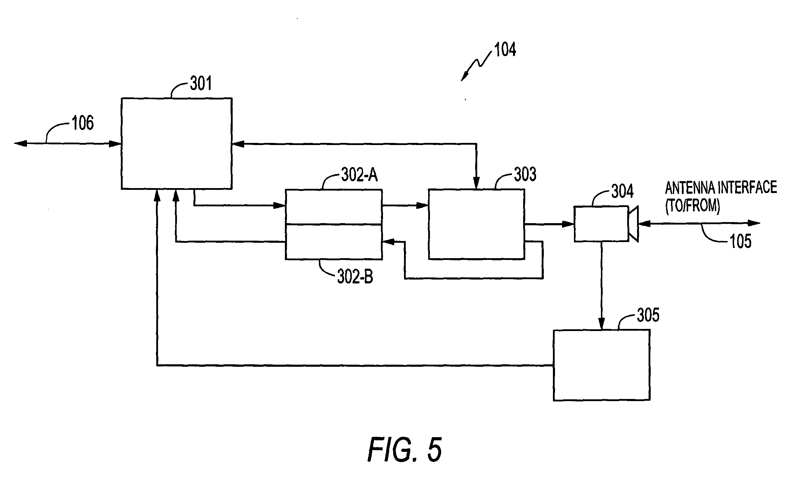

The RF1 Processing and Control Unit **102** also contains the Tx Downconverter **404**, which receives a sample of the intermediate frequency transmit signal from the Solid-State Power Amplifier **303** (see **Fig. 5**). Tx Downconverter **404** receives a reference signal from Monitor and Control Unit **401**, to lock its Local Oscillator, which is used to further downconvert the sample of the intermediate frequency transmit signal to produce a transmit 25 MHz signal. This transmit 25 MHz signal is then applied to one input of Spectrum Analyzer Module **407**.

The Spectrum Analyzer Module **407**, accepts transmit and receive 25Mhz signals from the transmit downconverter **404** and receive downconverter **405**, respectively. These 25 MHz signals are then forwarded to a Base Band Unit **10**1 for display on a computer screen (not shown). In the preferred embodiment the following images may be displayed:
a) a depiction of the received spectrum of a beacon signal, or any other forward link signal capable of providing an indication of the relative power of such a signal (this information can be utilized for the accurate alignment of an associated antenna system);
b) a depiction of the spectrum of a satellite spectral signature received from a satellite accessed by the apparatus of this invention (this information can be used for verifying the antenna alignment to the desired satellite); and
c) a depiction of the spectrum of the transmitted signals (this information can be used for the provision of signal level and spectrum sideband information).

The operation of RF2 Processing Unit **104** can be explained by reference to **Figs. 2** and **5.** In the transmit direction, the intermediate frequency transmit signal from the Interfacility Link **106** enters the Junction/Indicator Box **301**. The output from Junction/Indicator Box **301** is applied to Transmitter **302A**. Transmitter **302A** upconverts the intermediate frequency transmit signal to the desired transmit frequency. The reference frequency for the upconversion is obtained from RF1 Processing and Control Unit **102** by means of Interfacility Link **106**. The transmit frequency output from Transmitter **302A** is amplified in Solid-State Power Amplifier **303** to a level required for transmission to another terminal or satellite. The output from Solid-State Power Amplifier **303** is applied to OMT/FEED **304**, and thence to the Antenna and Superstructure **105**, by means of which it is transmitted to another terminal or satellite.

In the receive direction, the receive air-link signal enters the OMT/Feed **304** from the Antenna and Superstructure **105**. The receive air-link signal is then applied to the Low Noise Block Downconverter **305**, where it is downconverted to a intermediate frequency receive signal by means of a Local Oscillator locked to the reference signal obtained from RF1 Processing and Control Unit **102** via Interfacility Link **106**. The intermediate frequency receive signal output by Low Noise Block Downconverter **305** is connected to the Interfacility Link **106** through the Junction/Indicator Box **301.**

RF2 Processing Unit **104** contains additional monitoring and controlling apparatus. A sample of the output of Solid-State Power Amplifier **303** is downconverted to L-band in Block Downconverter **302B**. This L-band signal, known as the Transmit Monitor Signal, is connected to the Interfacility Link **106** and thence to RF1 Processing and Control Unit **102,** through Junction/Indicator Box **301**.

It will be apparent that many modifications and variations could be effected by one skilled in the art without departing from the spirit or scope of the novel concepts of the present invention, so that the scope of the invention should be determined by the appended claims only. In the embodiment described, certain frequencies and frequency bands have been used for purposes of illustration. In practise, any frequency or frequency ranges may be utilized, with no departure from the generality of this invention.

It will be appreciated that the particular type or construction of the various components constituting the apparatus described in this invention are not critical or limiting to either the scope or practice of the present invention. As such, since the hardware implementation of these various components of the present invention will be easily and readily accessible to those skilled in the art of communications systems, these various components have only been referred to generically in the description of the present invention. In this regard, it will become apparent that the novelty of the present invention resides primarily in a unique combination and architectural configuration of these various components in order to create a novel apparatus for transmitting, receiving, monitoring, and controlling the transmit and receive signals required in a terminal used for communications with other terminals in a terrestrial or satellite communications system.

Accordingly, while this invention has been described with reference to illustrative embodiments, this description is not intended to be construed in a limiting sense. Various modifications of the illustrative embodiments, as well as other embodiments of the invention, will be apparent to persons skilled in the art upon reference to this description. It is therefore contemplated that the appended claims will cover any such modifications or embodiments as fall within the true scope of the invention.

## Claims

1. A portable terminal for wireless microwave communications, said terminal comprising a first portable unit, a second portable unit and an interfacility link:
a) said first portable unit comprising:
i. a base band unit for providing a user interface for control and monitoring of said portable terminal, for encoding and multiplexing input data into baseband transmit signals, and for decoding receive signals;
ii. an RF1 processing and control unit operative to upconvert said baseband transmit signals to an intermediate frequency; and
iii. a power supply operative to provide electrical power for said first and second portable units;
b) said second portable unit comprising:
i. an RF2 processing unit operative to upconvert said intermediate frequency transmit signals to airlink frequency transmit signals and to downconvert air link receive signals to intermediate frequency receive signals, and further operative to amplify said airlink frequency transmit signals for transmission; and
ii. an antenna operative to transmit said airlink frequency transmit signals and to receive said airlink frequency receive signals; and
c) said interfacility link for transmitting said intermediate frequency transmit and receive signals between said first and second portable units and for transmitting electrical power from said first portable unit to said second portable unit;
wherein said portable terminal is operative to provide in-service terminal monitoring, control, alignment, and commissioning.

2. A portable terminal according to claim 1, wherein said RF1 processing and control unit comprises:
a) a monitor and control unit operative to provide a reference frequency;
b) a modulator for modulating said baseband transmit signals;
c) an upconverter for upconverting said baseband transmit signals to said intermediate frequency transmit signals;
d) a transmit downconverter for downconverting a sample of said intermediate frequency transmit signals; and
e) a receive downconverter for downconverting a sample of said intermediate frequency receive signals.

3. A portable terminal according to claim 1, wherein said RF2 processing unit comprises:
a) a transmitter for upconverting said intermediate frequency transmit signals to said airlink frequency transmit signals;
b) an amplifier for amplifying said airlink frequency transmit signals for transmission; and
c) a block downconverter for downconverting said airlink frequency receive signals to said intermediate frequency receive signals and for downconverting a sample of said airlink frequency transmit signals to said intermediate frequency.

4. A portable terminal according to claim 2, wherein said RF1 processing and control unit comprises a spectrum analyzer module for visual spectral display of said samples of said transmit and receive signals.

5. A portable terminal according to claim 1, wherein said intermediate frequency is in L-Band.

6. A portable terminal according to claim 1, wherein said intermediate frequency is in a range of 950-1450 MHz.

7. A portable terminal according to claim 1, wherein said RF1 processing and control unit comprises a stable reference frequency source.

8. A portable terminal according to claim 1, wherein said first and second portable units are each contained in a suitcase.

9. A portable terminal according to claim 1, wherein said portable terminal is operative to transmit said airlink frequency transmit signals and to receive said airlink frequency receive signals to and from a satellite.

10. A portable terminal according to claim 1, wherein said portable terminal is operative to transmit said airlink frequency transmit signals and to receive said airlink frequency receive signals to and from an earth terminal.

11. A portable terminal for wireless microwave communications, said terminal comprising a first portable unit, a second portable unit and an interfacility link:
a) said first portable unit comprising:
i. an RF1 processing and control unit operative to upconvert transmit signals from a baseband frequency to an intermediate frequency; and
ii. a power supply operative to provide electrical power for said first and second portable units;
b) said second portable unit comprising:
i. an RF2 processing unit operative to upconvert said transmit signals and downconvert receive signals, between an air link frequency and said intermediate frequency, and further operative to amplify said transmit signals for transmission; and
ii. an antenna operative to transmit said transmit signals and to receive said receive signals; and
c) said interfacility link for transmitting said intermediate frequency transmit signals and receive signals between said first and second portable units and for transmitting electrical power from said first portable unit to said second portable unit.

12. A portable terminal according to claim 11, wherein said portable terminal is operative to provide in-service terminal monitoring, control, alignment, and commissioning.

13. A portable terminal according to claim 11, said first portable unit comprising a base band unit for providing a user interface for control and monitoring of said portable terminal.

14. A portable terminal according to claim 11, wherein said RF1 processing and control unit comprises:
a) a monitor and control unit operative to provide a reference frequency;
b) a modulator for modulating said transmit signals;
c) an upconverter for upconverting said transmit signals from said modulator from said base band frequency to said intermediate frequency;
d) a transmit downconverter for downconverting samples of said transmit signals from said intermediate frequency to a lower frequency; and
e) a receive downconverter for downconverting samples of said receive signals from said intermediate frequency to a lower frequency.

15. A portable terminal according to claim 11, wherein said RF2 processing unit comprises:
a) a transmitter for upconverting said transmit signal from said intermediate frequency to said air link frequency;
b) an amplifier for amplifying said transmit signal for transmission; and
c) a downconverter for downconverting said receive signal from said air link frequency to said intermediate frequency and for downconverting a sample of said transmit signal from said air link frequency to said intermediate frequency.

16. A portable terminal according to claim 11, wherein said RF1 processing and control unit comprises a spectrum analyzer module for visual spectral display of said samples of said transmit and receive signals.

17. A portable terminal according to claim 11, wherein said intermediate frequency is in L-Band.

18. A portable terminal according to claim 11, wherein said intermediate frequency is in a range of 950-1450 MHz.

19. A portable terminal according to claim 11, wherein said RF1 processing and control unit comprises a stable reference frequency source.

20. A portable terminal according to claim 11, wherein said first and second portable units are each contained in a suitcase.

21. A portable terminal according to claim 11, wherein said portable terminal is operative to transmit said transmit signals and to receive said receive signals to and from a satellite.

22. A portable terminal according to claim 11, wherein said portable terminal is operative to transmit said transmit signals and to receive said receive signals to and from an earth terminal.
